# EUROPÄISCHE PATENTANMELDUNG

(11) **EP 0 689 964 A1**
(43) Veröffentlichungstag der Anmeldung: **03.01.1996**
(21) Anmeldenummer: 95105998.9
(22) Anmeldetag: 21.04.1995
(51) Int. Cl.: B60R 7/04, B60J 3/02

(54) **Fernsteuerungseinheit zur Installation in einem Fahrzeug**

(30) Priorität: 28.06.1994 US 267817
(71) Anmelder: GEBR. HAPPICH GmbH, D-42285 Wuppertal (DE)
(72) Erfinder: Pompino, Karl-Keinz, D-42113 Wuppertal (DE); Cauchois, Didier, F-57800 Guerting (FR); Viertel, Lothar, D-66802 Altforweiler (DE); Welter, Patrick, F-57730 La Chambre (FR)

(57) **Zusammenfassung**

Eine Fernsteuerungseinheit (10) zur Steuerung mehrerer automatischer Vorrichtungen zum Öffnen und Schließen mehrerer Garagentore, Parkhausschranken, Zäune privater Wohnhäuser und dergleichen befindet sich an der Decke (100) eines Fahrzeugs an der Sonnenblende (300). Die Fernsteuerungseinheit (10) weist Schalter zur Betätigung jeder der mehreren automatischen Öffnungs- und Schließvorrichtungen auf. Die Fernsteuerungseinheit (10) kann in einer in der Fahrzeugdecke (100) ausgebildeten Aussparung (110) oder in einer in der mit der Fahrzeugdecke (100) verbundenen Sonnenblende (300) ausgebildeten Aussparung (110) untergebracht sein, wenn sich die Sonnenblende (300) in ihrer Nichtgebrauchsstellung befindet. Als Alternative kann die Fernsteuerungseinheit (10) so geformt sein, daß sie einer Form eines Teils der Sonnenblende (300) entspricht, und so an der Fahrzeugdecke (100) befestigt sein, daß die Fernsteuerungseinheit (10) einen Umfang des Sonnenblendenteils umgibt. Darüber hinaus kann die Fernsteuerungseinheit (10) einstückig mit einer an der Fahrzeugdecke (100) befestigten Sonnenblendehalteklammer (200) geformt oder zu deren Aufnahme ausgelegt sein. Die Fernsteuerungsheinheit (10) kann über das elektrische System des Fahrzeugs oder eine Batterie (220) gespeist werden. Die Einheit sendet Funksignale an Empfänger, die in den automatischen Vorrichtungen enthalten sind.

## Beschreibung

### ALLGEMEINER STAND DER TECHNIK

Die vorliegende Erfindung betrifft eine Fernsteuerungseinheit zur Verwendung in einem Kraftfahrzeug und insbesondere eine Fernsteuerungseinheit, die in dem Fahrzeug angebracht werden kann, über an der Fahrzeugsonnenblende angebrachte Mittel betätigbar und so ausgelegt ist, daß sie mehrere automatische Vorrichtungen fernbetätigen kann, z.B. zum Öffnen und Schließen mehrerer Garagentore, Parkhausschranken, Zäune privater Wohnhäuser usw. von innerhalb des Fahrzeugs.

Eine herkömmliche Fernsteuerungseinheit zur Betätigung einer automatischen Vorrichtung umfaßt eine tragbare Betätigungseinrichtung, die einen batteriegespeisten Sender zur Betätigung einer einzelnen automatischen Vorrichtung wie z.B. eines Tors, einer Schranke oder eines Zaun enthält. Der Sender wird entweder von seiner eigenen intern untergebrachten Niedervoltbatterie gespeist, oder er kann an dem Bordnetz des Fahrzeugs angeschlossen sein. Die tragbare Betätigungseinrichtung ist in einem Gehäuse enthalten und kann irgendwo im Fahrzeug angebracht sein. Oftmals ist die tragbare Betätigungseinrichtung über eine Klemme an einer Sonnenblende angebracht, wobei die Klemme zur abnehmbaren Befestigung der Betätigungseinrichtung an der Sonnenblende am Gehäuse der Betätigungseinrichtung vorgesehen ist.

Eine derartige Betätigungseinrichtung kann jedoch leicht entfernt oder verlegt oder sogar aus einem Fahrzeug gestohlen werden, wobei in letzterem Fall einer nicht autorisierten Person Zugang zu einem Haus oder einem Parkhaus gewährt wird. Darüber hinaus muß die Betätigungseinrichtung, bevor sie verwendet werden kann, von ihrem Aufbewahrungsort wie z.B. der Sonnenblende oder dem Handschuhfach entfernt werden, wenn sie sich nicht in einer Dauerstellung zur Verwendung befindet. Nach dem Gebrauch muß die Betätigungseinrichtung wieder an ihren Aufbewahrungsort zurückgelegt werden. Des weiteren ist typischerweise eine getrennte tragbare Betätigungseinrichtung für jede automatische Vorrichtung vorgesehen und wird im Fahrzeug aufbewahrt, wenn mehr als eine automatische Vorrichtung wie z.B. ein Garagentor, eine Parkhausschranke oder ein Zaun eines privaten Wohnhauses von einem einzigen Fahrzeug aus betätigt werden soll. Dadurch werden die obigen Probleme vervielfacht, und es kommt das Problem hinzu zu bestimmen, welche Betätigungseinrichtung für jede einzelne automatische Vorrichtung verwendet werden muß.

Im amerikanischen Patent Nr. 4,247,850 ist eine andere herkömmliche Fahrzeuggaragentor-Betätigungseinrichtung beschrieben, wobei ein von einem Bediener gesteuerter Funksender zur Betätigung von nur einem einzelnen Tor, einer einzelnen Schranke oder einem einzelnen Zaun an einer Sonnenblende des Fahrzeugs angebracht ist. Die Betätigungseinrichtung enthält eine Schaltung zur Steuerung des Senders, eine Leuchtdiode zur Anzeige des Betriebs der Schaltung und einen Schalter zur Aktivierung der Schaltung. Der Schalter und die Leuchtdiode sind an einem Rahmen eines an der Sonnenblende angebrachten Schminkspiegels angebracht. Der Schalter kann evtl. anderswo am Sonnenblendenkörper angebracht werden, und zwar entweder an der Fläche, die freigelegt wird, wenn die Sonnenblende in ihre Gebrauchsstellung heruntergeklappt wird, oder die angehoben wird, wenn sie nicht im Gebrauch ist. Des weiteren ist die Sonnenblende gewöhnlich schwenkbar an der Fahrzeugdecke befestigt, damit ein Fahrzeuginsasse die Ausrichtung der Sonnenblende mittels einer Drehbewegung einstellen kann.

Betätigt ein Fahrzeuginsasse den Schalter der Betätigungseinrichtung, wird die Sonnenblende, die den Schalter trägt, vom Fahrer weg gedreht, wodurch es für den Fahrer schwierig wird, den Schalter zu betätigen, und zwar insbesondere unter Verwendung von nur einer Hand. Der Fahrer könnte mit einer Hand die Sonnenblende festhalten und mit der anderen Hand den Schalter betätigen, was aber bei einem fahrenden Fahrzeug unmöglich ist, oder der Insasse muß die Sonnenblende nach Betätigung des Schalters wieder in ihre vorherige Position zurückstellen. Weiterhin können aufgrund des Gewichts des Schminkspiegels, des Betätigungsschalters, der Leuchtdiode und der Betätigungseinrichtungsbeschaltung und des Senders, die an der Sonnenblende angebracht sind, robustere und folglich teurere Sonnenblendenbefestigungsklammern erforderlich sein.

Darüber hinaus kann die in dem U.S.-Patent 4,247,850 gezeigte Betätigungseinrichtung nur zur Betätigung einer automatischen Vorrichtung verwendet werden. Muß der Fahrer eine zusätzliche Vorrichtung betätigen, sind folglich zusätzliche an der Sonnenblende angebrachte Betätigungseinrichtungen erforderlich. Wenn ein Fahrer das Tor, die Schranke oder den Zaun auswechselt, den das Fahrzeug passieren soll, dann muß evtl. die gesamte Sonnenblendenanordnung durch eine neue Sonnenblende mit einer entsprechenden Betätigungseinrichtung ersetzt oder die Sonnenblende zum Auswechseln der Betätigungseinrichtung auseinandergebaut werden.

### KURZE DARSTELLUNG DER ERFINDUNG

Es ist eine Aufgabe der vorliegenden Erfindung, eine in einem Fahrzeug angebrachte Fernsteuerungsbetätigungseinrichtung bereitzustellen, die die oben erwähnten Probleme bei herkömmlichen Fernsteuerungseinheiten überwindet.

Es ist des weiteren eine Aufgabe der vorliegenden Erfindung, eine Fernsteuerungseinheit zur Fernsteuerung mehrerer automatischer Vorrichtungen bereitzustellen, z.B. zum Öffnen und Schließen von Schranken, Toren und Zäunen von innerhalb eines Fahrzeugs.

Eine weitere Aufgabe der vorliegenden Erfindung ist es, eine solche Universalfernsteuerungseinheit bereitzustellen, die leicht zu betätigen ist.

Des weiteren ist es eine Aufgabe der vorliegenden Erfindung, eine Universalfernsteuerungseinheit bereitzustellen, die leicht und abnehmbar in einem Fahrzeug angebracht werden kann.

Eine weitere Aufgabe der vorliegenden Erfindung ist es, eine solche Einheit bereitzustellen, die zur Steuerung einer anderen Schranke, eines anderen Tores oder Zauns umprogrammiert werden kann.

Die Fernsteuerungseinheit der vorliegenden Erfindung enthält ein Gehäuse, in dem die Bauteile der Einheit angeordnet sind. Das Gehäuse nimmt eine Sonnenblendehalteklammer auf, die ein Ende des Körpers einer Kraftfahrzeug-Sonnenblende festhält. Die Sonnenblendehalteklammer ist über eine Grundplatte fest an der Decke innen im Fahrzeug befestigt, und zwar typischerweise über der Windschutzscheibe. Dadurch wird das die Fernsteuerungseinheit enthaltende Gehäuse an der Fahrzeugdecke befestigt.

Die Fernsteuerungseinheit kann über ihre eigene Batteriestromversorgung gespeist werden, wird aber vorzugsweise über das Bordnetz und die Batterie des Fahrzeugs gespeist. Die Fernsteuerungseinheit ist mit elektrischen Leitungen verbunden, die von dem Bordnetz des Fahrzeugs durch ein in der Fahrzeugdecke ausgebildetes Loch laufen. Die elektrischen Leitungen sind mit auf der Grundplatte an der Decke angebrachten Kontakten verbunden. Die auf der Grundplatte angeordneten Kontakte sind mit Kontakten verbunden, die mit der Fernsteuerungseinheit verbunden sind oder darin angeordnet sind, um die Fernsteuerungseinheit mit elektrischem Strom zu versorgen. Als Alternative kann die Fernsteuerungseinheit von einer leicht auswechselbaren Niedervoltbatterie gespeist werden, die von der Fahrzeugbatterie getrennt ist.

Die Fernsteuerungseinheit weist mehrere Schalter auf, die vorzugsweise von durch in dem Gehäuse ausgebildete Öffnungen ragenden Schaltknöpfen betätigt werden. Jeder Knopf oder eine Folge von Knöpfen kann von einem Fahrzeuginsassen gedrückt werden, um den Betrieb einer von mehreren verschiedenen automatischen Vorrichtungen fernzusteuern. Des weiteren weist das Gehäuse eine Öffnung für eine Steckverbindung für eine lernfähige oder programmierbare Vorrichtung auf, die eingesetzt werden kann, wenn eine andere automatische Vorrichtung von der Fernsteuerungseinheit betätigt werden soll. Die Fernsteuerungseinheit der vorliegenden Erfindung ist somit in der Lage, mehrere verschiedene automatische Vorrichtungen von einer einzigen Fernsteuerungseinheit aus zu steuern. Darüber hinaus kann die Fernsteuerungseinheit schnell und einfach modifiziert werden, um eine neue zu steuernde automatische Vorrichtung mit einzubeziehen.

Das Gehäuse enthält des weiteren eine Öffnung, damit eine Anzeigevorrichtung wie z.B. ein Leuchtdiode dadurchragen kann, um anzuzeigen, daß einer der Knöpfe gedrückt und der Schalter erfolgreich betätigt worden ist.

Die elektrischen Bauteile der Fernsteuerungseinheit können vorzugsweise im Gehäuse angeordnet sein. Sie können einen Funksender, eine gedruckte Schaltung mit einem Mikroprozessor zur Steuerung des Funksenders und eine an dem Sender befestigte Antenne umfassen. Wie oben erwähnt, kann das Gehäuse des weiteren elektrische Kontakte zur Ineingriffnahme der elektrischen Leitungskontakte enthalten, die zur Stromversorgung der gedruckten Schaltung durch das Loch in der Fahrzeugdecke ragen. Die im Gehäuse angeordneten Kontakte werden automatisch mit den durch die Fahrzeugdecke ragenden Kontakten verbunden, wenn die Sonnenblendehaltevorrichtung und das Gehäuse an der Decke befestigt werden.

Damit die nach außen weisende Fläche einer Sonnenblende mit der benachbarten Fahrzeugdecke bündig ist, wenn sich die Sonnenblende in ihrer angehobenen Nichtgebrauchsstellung befindet, kann die Sonnenblende mit einer Aussparung versehen sein, die entsprechend dem Gehäuse der Fernsteuerungseinheit ausgebildet ist, um das Gehäuse bei vollständig in der Nichtgebrauchsstellung an der Fahrzeugdecke positionierter Sonnenblende aufzunehmen. Als Alternative kann in der Fahrzeugdecke eine Aussparung zur Aufnahme der Fernsteuerungseinheit bei in der Nichtgebrauchsstellung befindlicher Sonnenblende ausgebildet sein.

Bei einer weiteren Ausführungsform ist das Gehäuse der Fernsteuerungseinheit so ausgebildet, daß es über einen Teil des Umfangs einer Sonnenblende hinausragt, so daß das Gehäuse der Fernsteuerungseinheit und insbesondere die Schaltknöpfe neben der Sonnenblende angeordnet sind, wenn sich die Sonnenblende in ihrer Nichtgebrauchsstellung befindet. Bei dieser Ausführungsform braucht ein Bediener der Fernsteuerungseinheit nicht die Sonnenblende in eine geöffnete oder Gebrauchsstellung zu bewegen, um die Schaltknöpfe an der Fernsteuerungseinheit bedienen zu können.

Bei einer weiteren Ausführungsform kann an der Fahrzeugdecke an der Windschutzscheibe eine Deckenplatte vorgesehen und befestigt sein. Die Deckenplatte kann eine Halterungsanordnung zur Befestigung der Deckenplatte an der Fahrzeugdecke enthalten. Vorzugsweise sind an der Deckenplatte eine Sonnenblende, Sonnenblendenhalteklammern und eine Fernsteuerungseinheit angebracht.

Ein Vorteil der vorliegenden Erfindung ist die Befestigung der gesamten Fernsteuerungseinheit oder mindestens der Steuerschalter oder -knöpfe an der Decke eines Fahrzeugs. Dadurch ist die Fernsteuerungseinheit verborgen, wenn sich die Sonnenblende in der Nichtgebrauchsstellung an der Decke befindet. Und was noch wichtiger ist, ein Benutzer kann die Schaltknöpfe leicht mit einer Hand und ohne Anhalten eines Fahrzeugs und ohne die Gefahr, daß die Sonnenblende bei Betätigung der Schaltknöpfe evtl. wegschwenkt, drücken. Somit bewegt sich die Sonnenblende oder die Fernsteuerungseinheit im Gegensatz zu herkömmlichen Vorrichtungen nicht, wenn ein Benutzer auf einen der Knöpfe drückt.

Darüber hinaus ist die erfindungsgemäße Fernsteuerungseinheit am Fahrzeug befestigt, wodurch die Möglichkeit ausgeschaltet wird, daß sie verlegt wird, und Diebstahl erschwert wird. Des weiteren kann die Fernsteuerungseinheit leicht installiert werden, und eine ganz neue Fernsteuerungseinheit kann installiert werden, ohne daß die Sonnenblende ausgewechselt werden muß.

Die Schalter können durch Kipp- oder Schiebeschalter oder durch eindrückbare Knöpfe betätigt werden, oder sie können unbewegliche Tastfeldschalter sein, die bei Fingerkontakt ohne Bewegung betätigt werden.

Weitere Merkmale und Vorteile der vorliegenden Erfindung sind aus der folgenden Beschreibung der Erfindung unter Bezugnahme auf die beigefügten Zeichnungen ersichtlich.

### KURZE BESCHREIBUNG DER ZEICHNUNGEN

Fig. 1 ist eine schematische Ansicht einer ersten Ausführungsform der Erfindung;
Fig. 2 ist eine auseinandergezogene schematische Ansicht der in Fig. 1 gezeigten Ausführungsform;
Fig. 3 ist eine Querschnittsansicht der in Fig. 1 gezeigten Ausführungsform durch die Fernsteuerungseinheit entlang der Linie 3-3;
Fig. 4 ist eine auseinandergezogene schematische Ansicht einer zweiten Ausführungsform der Erfindung;
Fig. 5 ist eine Querschnittsansicht der in Fig. 4 gezeigten Ausführungsform durch die Fernsteuerungseinheit entlang der Linie 5-5 und
Fig. 6 ist eine schematische Ansicht einer dritten Ausführungsform der Erfindung.

### AUSFÜHRLICHE BESCHREIBUNG DER BEVORZUGTEN AUSFÜHRUNGSFORMEN

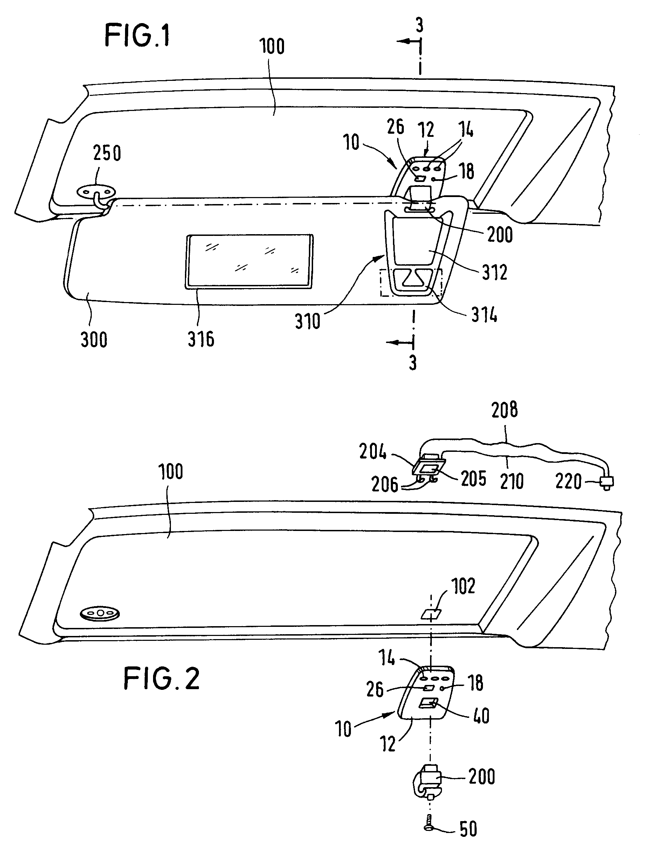

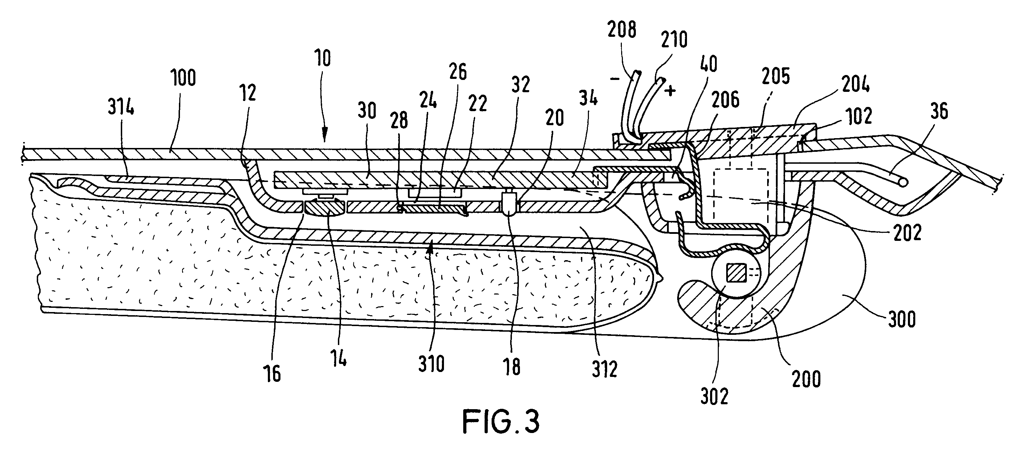

In den Figuren zeigen gleiche Bezugszahlen gleiche Elemente an. Eine erste Ausführungsform einer erfindungsgemäßen Fernsteuerungseinheit 10 ist in Fig. 1 - 3 gezeigt. Wie unten beschrieben, ist die Fernsteuerungseinheit 10 in einem Gehäuse 12 angeordnet, das an einer Decke 100 eines Fahrzeugs (nicht gezeigt) über der Windschutzscheibe befestigt ist.

Als Alternative kann der in Fig. 1 gezeigte Teil der Decke 100 als eine an der Fahrzeugdecke anzubringende getrennte Deckenplatte ausgebildet sein. Eine derartige Deckenplatte kann aus Kunststoff geformt oder aus einem anderen geeigneten Material gebildet sein und enthält eine Aussparung, deren Form allgemein komplementär zu der Fläche und den Konturen der Sonnenblende 300 und den Elementen an der Sonnenblendenfläche ist, die bei in ihrer Nichtgebrauchsstellung angehobener Sonnenblende zur Innenseite der Aussparung weisen. Die Deckenplatte enthält vorzugsweise die in Fig. 1 - 3 gezeigten, daran angebrachten Bauelemente. Eine Deckenplatte würde auf wohlbekannte Weise an einer Fahrzeugdecke befestigt werden und kann von der Auskleidungsschicht über der Decke bedeckt sein.

Die Fernsteuerungseinheit 10 enthält mehrere Schaltknöpfe 14 oder nicht bewegliche Schalttastkontakte oder dergleichen, die durch mehrere in dem Gehäuse 12 ausgebildete Zugangslöcher 16 ragen oder dabei zugänglich sind. Die Knöpfe 14 dienen der Betätigung mehrerer verschiedener automatischer Vorrichtungen wie z.B. Schranken-, Tor- oder ähnlicher Öffnungsvorrichtungen. Obwohl in Fig. 1 drei Knöpfe 14 gezeigt sind, kann die Anzahl der in der Fernsteuerungseinheit 10 vorgesehenen Knöpfe 14 gemäß der Anzahl über die Fernsteuerungseinheit 10 zu steuernder automatischer Vorrichtungen gewählt werden, z.B. ein Knopf pro Vorrichtung oder ein Knopfdruckfolgemuster für jede Vorrichtung. Die Einzelheiten der automatischen Betätigung von Knöpfen zur Sendung eines Signals von der Einheit 10 ist für diese Erfindung nicht entscheidend.

Des weiteren enthält die Fernsteuerungseinheit 10 eine Anzeigevorrichtung 18, die durch ein in dem Gehäuse 12 ausgebildetes Loch 20 ragt. Die Anzeigevorrichtung 18 kann dazu dienen, einen Benutzer zu benachrichtigen, daß ein Knopf 14 betätigt worden ist oder daß die Fernsteuerungseinheit 10 ein Signal sendet. Die Anzeigevorrichtung 18 kann vorzugsweise eine Leuchtdiode (LED) oder eine andere optische Anzeigevorrichtung enthalten. Die Anzeigevorrichtung 18 kann zusätzlich zu einem optischen Signal oder stattdessen ein hörbares Signal aussenden.

Weiterhin ist in dem Gehäuse 12 ein Mehrfachstecker 22 angeordnet, der programmierbar und leicht austauschbar ist. Der Mehrfachstecker 22 wird durch ein in dem Gehäuse ausgebildetes Loch 24 eingesetzt und ist an einer gedruckten Schaltung befestigt. Der Mehrfachstecker 22 kann leicht von der gedruckten Schaltung abgenommen und ausgewechselt werden. Wie im Stand der Programmiertechnik bekannt, kann der Mehrfachstecker so programmiert werden, daß er einen beliebigen Toröffner oder eine andere auf ein gesendetes Signal reagierende automatische Vorrichtung steuern kann. Zur Abdeckung des Lochs 24 ist an dem Gehäuse 12 eine Abdeckung 26 befestigt. Die Abdeckung 26 kann leicht abgenommen und durch Preßpassung oder durch Vorsehen eines Vorsprungs 28 an der Abdeckung 26 zum Eingriff in einer im Gehäuse 12 ausgebildeten Aufnahmeaussparung befestigt werden.

Eine Leiterplatte 30 ist im Gehäuse 12 angebracht. Die Leiterplatte 30 enthält einen Mikroprozessor 32 zur Steuerung eines Funksenders 34, der ebenfalls im Gehäuse 12 angebracht ist. Der Funksender 34 ist zum Senden von Funksignalen an einer Antenne 36 angeschlossen.

Ein im Gehäuse 12 der Fernsteuerungseinheit ausgebildetes Loch 40 ist zur Aufnahme einer äußeren Sonnenblendehalteklammer 200, die an der Decke 100 des Fahrzeugs befestigt ist, geformt. Des weiteren ist eine Sonnenblendehaupthalteklammer 250 am der Klammer 200 gegenüberliegenden Ende der Sonnenblende 300 vorgesehen. Die Halteklammer 200 weist eine Kuppel 202 zum Einpassen in das im Gehäuse 12 ausgebildete Loch 40 und in das entsprechende in der Decke 100 ausgebildete Loch 102 auf.

Die Halteklammer 200 ist mit einer auf der anderen Seite oder der Innenseite der Decke 100 angeordneten Befestigungsplatte 204 verbunden. In der Befestigungsplatte 204 ist ein Loch 205 zur Aufnahme der Kuppel 202 und einer Schraube 50 ausgebildet, mit der die Halteklammer 200 an der Befestigungsplatte 204 befestigt ist. Die Befestigungsplatte 204 trägt des weiteren mehrere daran angebrachte elektrische Kontakte 206 zur Ineingriffnahme von Kontakten in der Fernsteuerungseinheit 10. An einem Ende sind die Kontakte 206 über standardmäßige elektrische Drähte 208, 210 des Bordnetzes des Fahrzeugs mit einer Batterie 220 des Fahrzeugs verbunden. Am anderen Ende sind die Kontakte 206 mit der gedruckten Schaltung 30 in dem Gehäuse 12 verbunden. Somit wird die Fernsteuerungseinheit 10 ständig mit elektrischem Strom versorgt.

Sind in der Fahrzeugdecke keine elektrischen Kontakte 206 vorgesehen, kann die Fernsteuerungseinheit 10 von einer tragbaren elektrischen Batterie gespeist werden, die abnehmbar in der Fernsteuerungseinheit 10 befestigt ist.

Eine Sonneblende 300 ist über die beiden Sonnenblendehalteklammern 200 und 250 an der Decke 100 befestigt. Ein entlang dem Rand der Sonnenblende 300 angebrachter äußerer Stützstab 302 wird in der äußeren Halteklammer 200 der Sonnenblende aufgenommen, um die Sonnenblende drehbar an der Decke 100 zu befestigen.

Die Sonnenblende 300 ist vorzugsweise mit einem Fernsteuerungseinheitsempfänger 310 ausgebildet, der eine zur Aufnahme der Fernsteuerungseinheit 10 komplementär zu dieser geformte Aussparung aufweist. Diese Anordnung ist bei einer Deckenplatte 100 mit Normalprofil geeignet, die mit Profil für eine Sonnenblende versehen ist, denn der Platz zur Aufnahme der Fernsteuerungseinheit wird durch Ausbildung des Empfängers 310 im Sonnenblendenkörper geschaffen. Der Empfänger 310 enthält des weiteren einen Rahmen 312, der eine Halteklemme 314 zum Halten eines Parkscheins oder dergleichen aufweisen kann. Des weiteren kann die Sonnenblende 300 einen Schminkspiegel 316 enthalten, der, wie es üblich ist, eine von der Fahrzeugbatterie gespeiste Lampe aufweisen kann.

Die Fernsteuerungseinheit 10 wird wie folgt installiert. Die Sonnenblendehalteklammer 200 wird in das Loch 40 im Gehäuse 12 eingesetzt. Eine Schraube 50 wird in ein (nicht gezeigtes) Loch in der Halteklammer 200, das Loch 102 in der Decke 100 und das Loch 205 in der Befestigungsplatte 204 eingesetzt. Das Loch 205 in der Befestigungsplatte weist vorzugsweise einen Gewindemutterteil zum Eingriff mit der Schraube 50 auf. Zur Befestigung der Sonnenblendehalteklammer 200 und der Fernsteuerungseinheit 10 an der Decke 100 kann eine beliebige Anzahl von Schrauben 50 verwendet werden. Des weiteren können die Schrauben 50, falls gewünscht, in im Gehäuse 12 ausgebildete, nicht gezeigte Löcher eingesetzt werden.

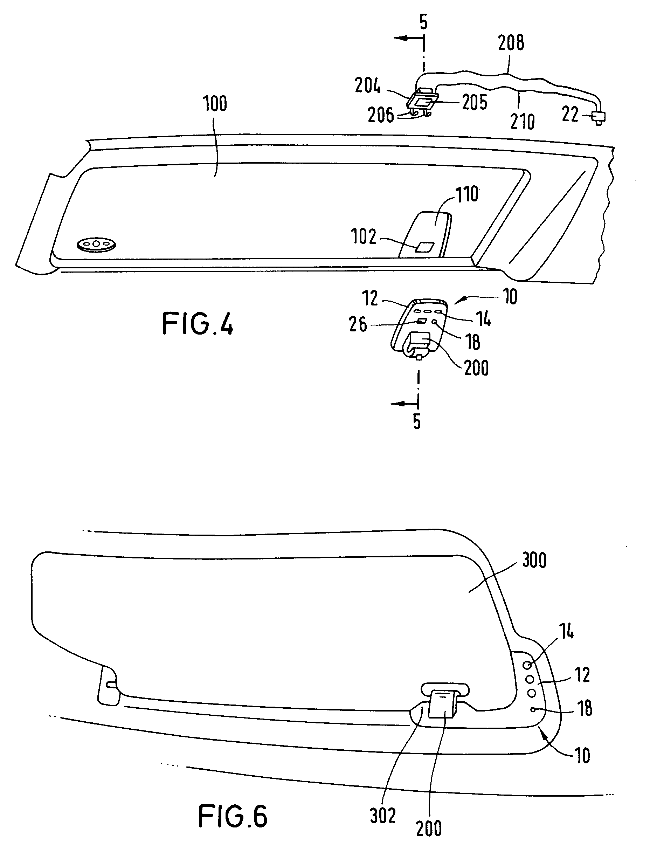

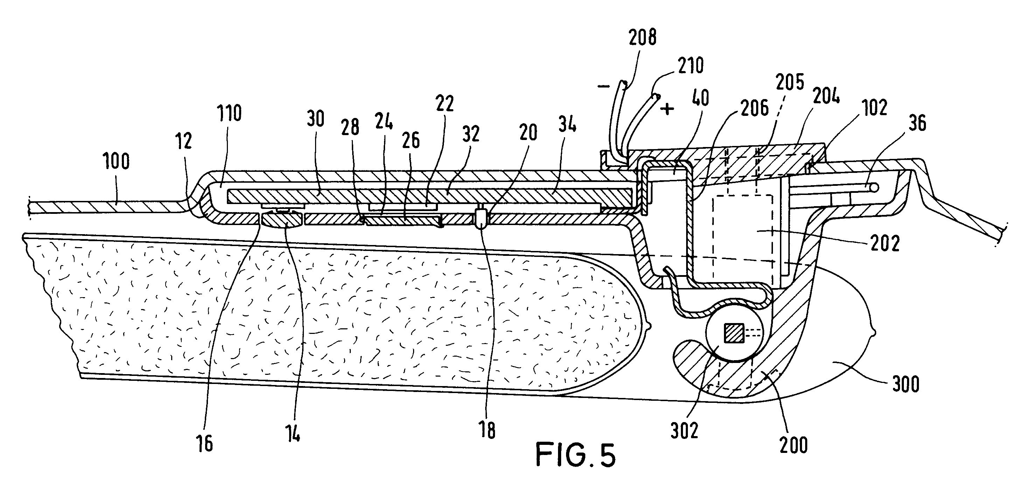

Bei einer in den Fig. 4 und 5 gezeigten alternativen Ausführungsform sind das Gehäuse 12 der Fernsteuerungseinheit und die äußere Halteklammer 200 der Sonnenblendenbefestigung als eine einzige Einheit ausgebildet. Die Kombination aus Fernsteuerungseinheit 10 und Klammer 200 wird durch Einsetzen einer Schraube 50 in mindestens ein in der kombinierten Anordnung ausgebildetes (nicht gezeigtes) Loch und in das in der Befestigungsklammer 204 ausgebildete Loch 205 befestigt.

Des weiteren ist bei der in den Fig. 4 und 5 gezeigten Ausführungsform die Decke 100 mit einem Spezialprofil versehen, wobei eine Aussparung 110 zur Aufnahme der Fernsteuerungseinheit 10 komplementär zu dieser ist. Die Fernsteuerungseinheit 10 wird genauso in der Aussparung 110 angebracht, wie die bei der ersten Ausführungsform beschriebene Einheit 10 an der Decke 100 befestigt wird. Dank der Aussparung 110 in der Decke kann die Fernsteuerungseinheit 10 bündig mit der Decke 100 angebracht werden, und aus diesem Grunde ist der an der Sonnenblende 300 bei der ersten Ausführungsform vorgesehene Fernsteuerungseinheitsempfänger 310 nicht notwendig.

Bei einer weiteren Ausführungsform in Fig. 6 sind die Bedienungsknöpfe 14 der Fernsteuerungseinheit 10 und ein Teil des Gehäuses 12 außerhalb des Umfangs der Sonnenblende 300 angebracht. Das Gehäuse 12 ist zum Zusammenwirken mit der Form der Sonnenblende 300 allgemein L-förmig. Und zwar paßt das L-förmige Gehäuse 12 um einen Umfang eines Endteils der Sonnenblende 300.

Das Gehäuse 12 kann wie bei der ersten Ausführungsform durch Einsetzen einer Sonnenblendehalteklammer 200 in ein in dem Gehäuse 12 ausgebildetes Loch mit der Fahrzeugdecke 100 verbunden werden. Des weiteren können die Sonnenblendehalteklammer 200 und das Gehäuse 12 wie bei der zweiten Ausführungsform als eine einzige Einheit ausgebildet werden. Aufgrund der Form des Gehäuses 12 sollten an einem Ende des Gehäuses 12, das von der Position der Sonnenblendehalteklammer 200 entfernt liegt, andere Befestigungsvorrichtungen wie z.B. Schrauben 50 verwendet werden.

Bei der in Fig. 6 gezeigten Ausführungsform muß der Fahrzeuginsasse die Sonnenblende 300 nicht bewegen, um zur Betätigung eines der Knöpfe 14 Zugang zu diesen zu gewinnen. Stattdessen sind das Gehäuse 12 und die Knöpfe 14 so an der Decke 100 geformt und/oder angebracht, daß dem Benutzer leicht Zugang zur Fernsteuerungseinheit 10 gewährt wird.

Obwohl die vorliegende Erfindung anhand spezieller Ausführungsformen derselben beschrieben wurde, sind für Fachleute viele andere Ausführungen und Modifikationen und andere Verwendungen ersichtlich. Aus diesem Grunde wird bevorzugt, daß die vorliegende Erfindung nicht von der speziellen Offenbarung hierin, sondern nur von den angehängten Ansprüchen beschränkt wird.

## Patentansprüche

1. Fernsteuerungseinheit (10) zur Verwendung in einem Fahrzeug zur Steuerung einer automatischen Vorrichtung außerhalb des Fahrzeugs, wobei das Fahrzeug eine Decke (100) und eine an der Decke (100) befindliche Sonnenblende (300) aufweist und die Fernsteuerungseinheit (10) an der Fahrzeugdecke (100) in der Nähe der Sonnenblende (300) angebracht ist, wobei die Fernsteuerungseinheit (10) folgendes umfaßt: eine Schaltung, einen mit der Schaltung verbundenen Sender (34), eine mit dem Sender (34) verbundene Antenne (36), und mindestens ein an der Fahrzeugdecke (100) befindliches Schaltmittel, das zur Betätigung der Schaltung und des Senders (34) zum Senden eines Funksignals über die Antenne (36) zur automatischen Vorrichtung mit der Schaltung verbunden ist.

2. Fernsteuerungseinheit (10) nach Anspruch 1, die weiterhin eine Anzeigevorrichtung (18) zur Anzeige, daß die Schaltung und der Sender (34) zum Senden eines Signals aktiviert worden sind, umfaßt.

3. Fernsteuerungseinheit (10) nach Anspruch 1, die weiterhin eine programmierbare Vorrichtung umfaßt, die zur Steuerung der automatischen Vorrichtung abnehmbar in der Fernsteuerungseinheit (10) angebracht ist.

4. Fernsteuerungseinheit (10) nach Anspruch 1, bei der die Schaltung einen Mikroprozessor (32) zur Erzeugung von zu sendenden Signalen, um mehrere automatische Vorrichtungen einzeln zu steuern, umfaßt.

5. Fernsteuerungseinheit (10) nach Anspruch 4, die weiterhin mehrere der Schaltmittel umfaßt, wobei jedes der gezielten Steuerung des Mikroprozessors (32) mit der Schaltung verbunden ist.

6. Fernsteuerungseinheit (10) nach Anspruch 1, die Fahrzeugdecke (100) und die Sonnenblende (300) als Kombination, wobei die Sonnenblende (300) so an der Fahrzeugdecke (100) angebracht ist, daß sie in eine Gebrauchsstellung nach unten und in eine Nichtgebrauchsstellung an der Fahrzeugdecke (100) nach oben geschwenkt werden kann, wobei die Kombination weiterhin eine Aussparung (110) in der Decke (100) umfaßt und die Fernsteuerungseinheit (10) in der Aussparung (110) aufgenommen wird, damit die Sonnenblende (300) ohne Behinderung durch die Fernsteuerungseinheit (10) in eine Nichtgebrauchsstellung an der Decke (100) bewegt werden kann.

7. Kombination nach Anspruch 6, bei der sich die Aussparung (110) so in der Decke (100) befindet, daß die Fernsteuerungseinheit (10) mit einer Fläche der Decke (100) bündig ist.

8. Kombination nach Anspruch 6, die weiterhin Mittel umfaßt, mit denen die Sonnenblende (300) schwenkbar an der Decke (100) befestigt ist, damit die Sonnenblende (300) zwischen einer Nichtgebrauchsstellung und einer Betriebsstellung gedreht werden kann, wobei die Fernsteuerungseinheit (10) so positioniert ist, daß sie in der Aussparung (110) aufgenommen wird, wenn sich die Sonnenblende (300) in der Nichtgebrauchsstellung befindet.

9. Kombination nach Anspruch 8, einer Aussparung (110) in der Decke (100), wobei die Fernsteuerungseinheit (10) in der Aussparung (110) aufgenommen wird, damit die Sonnenblende (300) ohne Behinderung durch die Fernsteuerungseinheit (10) in eine Nichtgebrauchsstellung an der Decke (100) bewegt werden kann, wobei die Sonnenblende (300) so geformt ist, daß sie auf der zur Decke (100) weisenden Seite eine in der Sonnenblende (300) befindliche Aussparung (110) definiert, wenn die Sonnenblende (300) in ihrer Nichtgebrauchsstellung angehoben wird, damit die Sonnenblende (300) ohne Behinderung durch die Fernsteuerungseinheit (10) in eine Nichtgebrauchsstellung an der Decke (100) bewegt werden kann.

10. Fernsteuerungseinheit (10) nach Anspruch 1, die weiterhin an der Fahrzeugdecke (100) ein Gehäuse (12) umfaßt, wobei sich das mindestens eine Schaltmittel am Gehäuse (12) befindet.

11. Fernsteuerungseinheit (10) nach Anspruch 10, bei der eine Sonnenblendehalteklammer (200) an der Decke (100) angebracht ist und das Gehäuse (12) eine Öffnung zur Aufnahme der Sonnenblendehalteklammer (200) aufweist.

12. Fernsteuerungseinheit (10) nach Anspruch 11, bei der die Sonnenblendehalteklammer (200) an der Decke (100) angebracht ist und durch die in dem Gehäuse (12) ausgebildete Öffnung die Fernsteuerungseinheit (10) in Eingriff nimmt, um die Fernsteuerungseinheit (10) an der Decke (100) zu befestigen.

13. Fernsteuerungseinheit (10) nach Anspruch 10, bei der das Gehäuse (12) eine einstückig angeformte Sonnenblendehalteklammer (200) enthält, wobei die Sonnenblendehalteklammer (200) zur Befestigung der Fernsteuerungseinheit (10) an der Decke (100) an letzteren angebracht ist.

14. Fernsteuerungseinheit (10) nach Anspruch 10, bei der sich die Schaltung und der Sender (34) im Gehäuse (12) befinden.

15. Fernsteuerungseinheit (10) nach Anspruch 11, die weiterhin mindestens einen elektrischen Kontakt (206) umfaßt, der mit der Schaltung verbunden ist und sich zumindest im Gehäuse (12) und/oder in der Sonnenblendehalteklammer (200) befindet, damit er mindestens einen aus der Decke (100) herausragenden elektrischen Kontakt (206) in Eingriff nimmt, um die Fernsteuerungseinheit (10) an einen im Fahrzeug angeordneten elektrischen Versorgungskreis anzuschließen.

16. Fernsteuerungseinheit (10) nach Anspruch 10, bei der sich die Schaltung und der Sender (34) im Gehäuse (12) an der Fahrzeugdecke (100) befinden und das Gehäuse (12) so ausgebildet ist, daß seine Form im wesentlichen der Form eines Teils des Umfangs der Sonnenblende (300) entspricht, und wobei das Gehäuse (12) außerhalb des Umfangs der Sonnenblende (300) angeordnet ist.

17. Fernsteuerungseinheit (10) nach Anspruch 16, bei der das Gehäuse (12) ein im wesentlichen L-förmiges Glied umfaßt, das so geformt und positioniert ist, daß es einen Teil des Umfangs der Sonnenblende (300) umgibt.

18. Fernsteuerungseinheit (10) nach Anspruch 17, die weiterhin eine an der Decke (100) angebrachte Sonnenblendehalteklammer (200) umfaßt, wobei in dem Gehäuse (12) eine Öffnung zur Aufnahme der Sonnenblendehalteklammer (200) ausgebildet ist.

19. Fernsteuerungseinheit (10) nach Anspruch 18, bei der die Sonnenblendehalteklammer (200) an der Decke (100) befestigt ist und die Fernsteuerungseinheit (10) durch die in dem Gehäuse (12) ausgebildete Öffnung in Eingriff nimmt, um die Fernsteuerungseinheit (10) an der Decke (100) zu befestigen.

20. Fernsteuerungseinheit (10) nach Anspruch 17, bei der das Gehäuse (12) eine einstückig angeformte Sonnenblendeklammer enthält, wobei die Sonnenblendehalteklammer (200) an der Decke (100) angebracht ist, um die Fernsteuerungseinheit (10) an der Decke (100) zu befestigen.
